# EUROPÄISCHE PATENTANMELDUNG

(11) **EP 2 657 369 A1**
(43) Veröffentlichungstag der Anmeldung: **30.10.2013**
(21) Anmeldenummer: 12165159.0
(22) Anmeldetag: 23.04.2012
(51) Int. Cl.: C25B 1/10, C25B 9/10, C25B 15/08, B01D 53/86

(54) **Verfahren zur elektolytischen Zerlegung von Wasser zu Wasserstoff und Sauerstoff**

(71) Anmelder: H-TEC Wasserstoff-Energie-Systeme GmbH, 23558 Lübeck (DE)
(72) Erfinder: Würfel, Claus, 23558 Lübeck (DE); Wilken, Dennis, 23847 Kastorf (DE); Mantai, Nils, 23560 Lübeck (DE); Küter, Uwe, 23560 Lübeck (DE); Höller, Stefan, 23552 Lübeck (DE)
(74) Vertreter: Patentanwälte Vollmann & Hemmer

(57) **Zusammenfassung**

Das Verfahren zur elektrolytischen Zerlegung von Wasser zu Wasserstoff und Sauerstoff wird mit einer Spannung betrieben, bei welcher neben molekularem Sauerstoff (O₂) auch Ozon (O₃) erzeugt wird, wobei der Ozonanteil nachfolgend entfernt wird. Die Elektrolyseeinrichtung (1) mit einem Elektrolyseur (2) zur elektrolytischen Zerlegung von Wasser zu Wasserstoff und Sauerstoff weist einen ersten Ausgang (3) zum Ableiten des bei der Elektrolyse erzeugten Wasserstoffs und einen zweiten Ausgang (5) zum Ableiten des bei der Elektrolyse entstandenen Sauerstoffs auf. In dem zweiten Ausgang (5) sind Mittel zum Entfernen von Ozon (6) angeordnet.

## Beschreibung

Die Erfindung betrifft ein Verfahren zur elektrolytischen Zerlegung von Wasser zu Wasserstoff und Sauerstoff und eine Elektrolyseeinrichtung.

Im Stand der Technik ist es bekannt, Elektrolyseeinrichtungen zur Erzeugung von Wasserstoff und/oder Sauerstoff einzusetzen. Dabei wird Wasser in einem Elektrolyseur elektrolytisch in Wasserstoff und Sauerstoff zersetzt. Die Elektrolyse des Wassers beginnt bei einer Spannung von etwa 1,5 V. Werden höhere Spannungen an die Elektroden des Elektrolyseurs angelegt, kann die Elektrolyse und somit die Gewinnung von Wasserstoff und/oder Sauerstoff noch beschleunigt werden.

Unter bestimmten Bedingungen wird lediglich der aus der Elektrolyse des Wassers gewonnene Wasserstoff gesammelt und später verwendet. Der gleichzeitig entstandene, jedoch nicht benötigte Sauerstoff wird in die Umgebung abgelassen.

Problematisch ist hierbei jedoch, dass oberhalb einer Spannung von ungefähr 2,3 V an der Sauerstoffelektrode nicht nur molekularer Sauerstoff (O₂) sondern auch dessen allotrope Form Ozon (O₃), welche aus einem Molekül mit drei Sauerstoffatomen besteht, entsteht. Ozon ist ein sehr reaktives und giftiges Gas. Spuren von Ozongas in der Luft zerfallen unter Normalbedingungen innerhalb einiger Tage zu dimerem Sauerstoff. Jedoch ist Ozon ein starkes Oxidationsmittel, das bei Menschen und Tieren zu Reizungen der Atemwege führen kann.

Vor diesem Hintergrund liegt der Erfindung die Aufgabe zugrunde, ein Verfahren zur elektrolytischen Zerlegung von Wasser und eine Elektrolyseeinrichtung bereitzustellen, welche eine Schädigung von Mensch und Umwelt bei gleichzeitig hoher Ausbeute vermeiden.

Diese Aufgabe wird gemäß der Erfindung wird durch ein Verfahren mit den in Anspruch 1 angegebenen Merkmalen und durch eine Elektrolyseeinrichtung mit den in Anspruch angegebenen Merkmalen 4 gelöst. Vorteilhafte Ausgestaltungen der Erfindung sind in den Unteransprüchen, der nachfolgenden Beschreibung und der Zeichnung angegeben.

Das erfindungsgemäße Verfahren zur elektrolytischen Zerlegung von Wasser zu Wasserstoff und Sauerstoff wird mit einer Spannung betrieben, bei welcher neben molekularem Sauerstoff (O₂) auch Ozon (O₃) erzeugt wird, wobei der Ozonanteil nachfolgend entfernt wird.

Grundgedanke der vorliegenden Erfindung ist es somit, nicht wie beim Stand der Technik die Entstehung von Ozon zu vermeiden, sondern die Entstehung von Ozon bewusst in Kauf zu nehmen, um eine höhere Wasserstoffausbeute zu erreichen, jedoch den Ozonanteil aus dem Sauerstoff nachfolgend zu entfernen, bevor dieser anderweitig genutzt oder in die Umgebung abgegeben wird.

Somit kann durch das erfindungsgemäße Verfahren mit einer hohen Spannung gearbeitet werden, um die Ausbeute der Wasserelektrolyse zu verbessern und das Verfahren effektiver zu machen, ohne umwelt-und gesundheitsschädigende schädigende Abgase bzw. Nebenprodukte der Wasserelektrolyse in die Umgebung einzuleiten. Nach Entfernen des Ozonanteils wird lediglich der reine molekulare Sauerstoff in die Umgebung eingeleitet, der weder gesundheits- noch umweltschädlich ist.

Zur Durchführung des erfindungsgemäßen Verfahrens ist eine Elektrolyseeinrichtung, insbesondere eine Elektrolyseeinrichtung mit einem Protonen-Austausch-Membran-Elektrolyseur (PEM), bevorzugt, welche bei einer Spannung oberhalb von 1,5 V, insbesondere oberhalb von 2,3 V, arbeitet, da oberhalb dieses Grenzwerts, die Ausbeute des erzeugten Wasserstoffs weiter ansteigt.

Das Ozon bzw. der Ozonanteil kann in dem Verfahren vorzugsweise mittels einer katalytischen Reduktion entfernt werden. Alternativ kann der Ozonanteil aber auch chemisch entfernt werden. Die katalytische Reduktion ist besonders vorteilhaft, da sie abgesehen von dem apparativen Aufbau keine weiteren Mehrkosten verursacht. Insbesondere wenn der Sauerstoff einer weiteren Nutzung zugeführt werden soll, ist die katalytische Reduktion von Vorteil, da dann die Sauerstoffmenge durch die Entfernung des Ozons nicht vermindert sondern erhöht wird.

Weiterhin umfasst die erfindungsgemäße Elektrolyseeinrichtung einen Elektrolyseur zur elektrolytischen Zerlegung von Wasser zu Wasserstoff und Sauerstoff, wobei die Elektrolyseeinrichtung einen ersten Ausgang zum Ableiten des bei der Elektrolyse erzeugten Wasserstoffs und einen zweiten Ausgang zum Ableiten des bei der Elektrolyse entstandenen Sauerstoffs aufweist, wobei in dem zweiten Ausgang Mittel zum Entfernen von Ozon angeordnet ist. Durch die erfindungsgemäße Ausgestaltung der Elektrolyseeinrichtung kann der Ozonanteil vor dem Austritt in die Umgebung entfernt werden und dann lediglich der molekulare und unschädliche Sauerstoff in die Umgebung eingeleitet werden. Da durch das bei der Wasserelektrolyse entstandene Ozon keine Schädigung der Umwelt erfolgt, kann die Elektrolyseeinrichtung bei geeignet hohen Spannungen betrieben werden, um eine möglichst große Ausbeute zu erzielen.

Dabei wird vorzugsweise ein Katalysator als Mittel zum Entfernen von Ozon, insbesondere zum Reduzieren von Ozon, in dem zweiten Ausgang angeordnet. Alternativ kann das Mittel zum Entfernen von Ozon aber auch eine Vorrichtung zum chemischen Entfernen des Ozonanteils sein.

Weiterhin ist bevorzugt, wenn der Katalysator ein in einem Reaktorbehälter angeordneter geschütteter Katalysator ist. Ein solcher geschütteter Katalysator ist besonders kostengünstig herstellbar und gegebenenfalls einfach erneuerbar, indem das Schüttgut ausgetauscht wird.

Die Oberfläche des Katalysators bzw. der Katalysatoren besteht typischerweise aus Metall, als aktive Schicht können zum Beispiel Palladium, Ruthenium, Irdidium, Platin oder andere geeignete Metalle Verwendung finden, die vorteilhaft auf einem Trägermaterial aufgebracht sind, beispielsweise auf Keramik- oder Kohlebasis.

Wie bereits oben erwähnt, arbeitet die Elektrolyseeinrichtung bei einer Spannung oberhalb von 1,5 V, insbesondere oberhalb von 2,3 V, da ab diesem Grenzwert die Ausbeute der Wasserelektrolyse erheblich zunimmt und die Effektivität der Elektrolyseeinrichtung deutlich verbessert werden kann.

Vorzugsweise ist der Sauerstoff über den zweiten Ausgang in die Umgebung ableitbar.

Darüber hinaus ist es von Vorteil, wenn der Wasserstoff über den ersten Ausgang zur weiteren Aufbereitung ableitbar ist. Beispielsweise kann der erzeugte Wasserstoffstrom ebenfalls Sauerstoffmoleküle enthalten, die entfernt werden müssen, bevor der Wasserstoff gespeichert oder verbraucht wird.

Der Elektrolyseur kann vorzugsweise ein Protonen-Austausch-Membran-Elektrolyseur (PEM) sein.

Die Erfindung ist nachfolgend anhand eines in der Zeichnung dargestellten Ausführungsbeispiels näher erläutert. Es zeigen
- Fig. 1: ein Diagramm zur Darstellung der Entwicklung der Elektrolyseausbeute in Abhängigkeit zu der an die Elektroden angelegten Spannung; und
- Fig. 2: eine schematische Darstellung eines Abschnitts einer Elektrolyseeinrichtung.

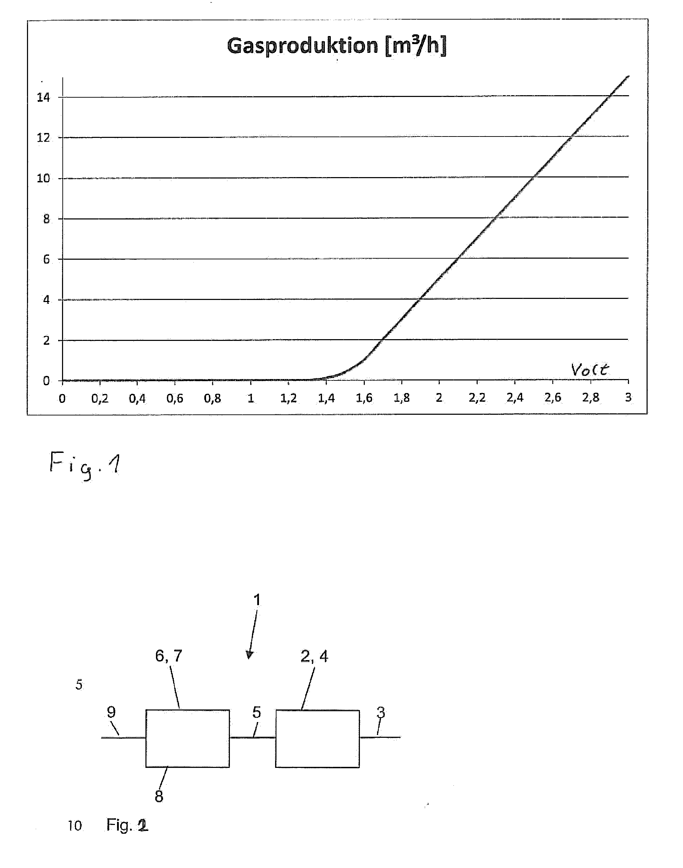

Figur 1 zeigt ein Ausbeute-Spannungs-Diagramm, in welchem die Entwicklung der Ausbeute von Wasserstoffgas in Abhängigkeit von der an die Elektroden angelegten Spannung während der Wasserelektrolyse dargestellt ist. Wie hier deutlich wird, kommt es oberhalb einer Spannung von ungefähr 1,5 V zu einem deutlichen Anstieg in der Ausbeute des während der Elektrolyse gewonnenen Wasserstoffs.

Figur 2 ist eine schematische Darstellung eines Abschnitts einer Elektrolyseeinrichtung 1. Insbesondere ist hier in der Figur erkennbar der Abschnitt der Elektrolyseeinrichtung 1, welcher unter anderem den Elektrolyseur 2, in welchem die elektrolytische Zerlegung von Wasser in Wasserstoff und Sauerstoff erfolgt, enthält. Bei dem Elektrolyseur 2 der Ausführungsform handelt es sich um einen Protonen-Austausch-Membran-Elektrolyseur (PEM), welcher mit Spannungen oberhalb von 1,5 V typischerweise von über 2,3 V arbeitet, um eine hohe Wasserstoffausbeute zu erzielen. Der durch die Elektrolyse von Wasser gewonnene Wasserstoff wird über einen ersten Ausgang 3 aus einem Elektrolysebehälter 4 des Elektrolyseurs 2 abgeleitet. Der aus dem Elektrolysebehälter 4 abgeleitete Wasserstoff kann dann weiter in einer oder mehreren hier nicht dargestellten Reaktorvorrichtungen aufbereitet werden und/oder anschließend einem Behälter zur Speicherung zugeführt werden.

Der Elektrolysebehälter 4 weist weiterhin einen zweiten Ausgang 5 zum Ableiten des bei der Elektrolyse entstandenen Sauerstoffs auf. In dem zweiten Ausgang 5 sind Mittel 6 zum Entfernen von Ozon angeordnet. Die Mittel 6 zum Entfernen von Ozon sind in der Ausführungsform als Katalysator 7 realisiert, welcher für die katalytische Reduzierung von Ozon zu molekularem Sauerstoff sorgt. Der Katalysator 7 umfasst einen Reaktorbehälter 8, in welchem ein geschütteter Katalysator angeordnet ist. Von dem Katalysator 7 wird der umweltverträgliche und nicht gesundheitsgefährdende molekulare Sauerstoff über einen Sauerstoffauslass 9 in die Umgebung abgeleitet.

### Bezugszeichenliste

- 1: Elektrolyseeinrichtung
- 2: Elektrolyseur
- 3: erster Ausgang
- 4: Elektrolysebehälter
- 5: zweiter Ausgang
- 6: Mittel zum Entfernen von Ozon
- 7: Katalysator
- 8: Recktorbehälter
- 9: Sauerstoffauslass

## Patentansprüche

1. Verfahren zur elektrolytischen Zerlegung von Wasser zu Wasserstoff und Sauerstoff, wobei das Verfahren mit einer Spannung betrieben wird, bei welcher neben molekularem Sauerstoff (O₂) auch Ozon (O₃) erzeugt wird, wobei der Ozonanteil nachfolgend entfernt wird.

2. Verfahren gemäß Anspruch 1, bei welchem eine Elektrolyseeinrichtung, insbesondere eine Elektrolyseeinrichtung mit einem Protonen-Austausch-Membran-Elektrolyseur (PEM), verwendet wird, welche bei einer Spannung oberhalb von 1,5 V, insbesondere oberhalb von 2,3 V, arbeitet.

3. Verfahren gemäß Anspruch 1 oder 2, bei welchem das Entfernen des Ozons mittels einer katalytischen Reduktion erfolgt.

4. Elektrolyseeinrichtung mit einem Elektrolyseur zur elektrolytischen Zerlegung von Wasser zu Wasserstoff und Sauerstoff, wobei die Elektrolyseeinrichtung einen ersten Ausgang zum Ableiten des bei der Elektrolyse erzeugten Wasserstoffs und einen zweiten Ausgang zum Ableiten des bei der Elektrolyse entstandenen Sauerstoffs aufweist, **dadurch gekennzeichnet, dass** in dem zweiten Ausgang Mittel zum Entfernen von Ozon angeordnet ist.

5. Elektrolyseeinrichtung gemäß Anspruch 4, **dadurch gekennzeichnet, dass** ein Katalysator als Mittel zum Entfernen von Ozon, insbesondere zum Reduzieren von Ozon, in dem zweiten Ausgang angeordnet ist.

6. Elektrolyseeinrichtung gemäß Anspruch 5, **dadurch gekennzeichnet, dass** der Katalysator ein in einem Reaktorbehälter angeordneter geschütteter Katalysator ist.

7. Elektrolyseeinrichtung gemäß einem der Ansprüche 4 bis 6, **dadurch gekennzeichnet, dass** die Elektrolyseeinrichtung bei einer Spannung oberhalb von 1,5 V, insbesondere oberhalb von 2,3 V arbeitet.

8. Elektrolyseeinrichtung gemäß einem der Ansprüche 4 bis 7, **dadurch gekennzeichnet, dass** der Sauerstoff über den zweiten Ausgang in die Umgebung ableitbar ist.

9. Elektrolyseeinrichtung gemäß einem der Ansprüche 4 bis 8, **dadurch gekennzeichnet, dass** der Wasserstoff über den ersten Ausgang zur weiteren Aufbereitung ableitbar ist.

10. Elektrolyseeinrichtung gemäß einem der Ansprüche 4 bis 9, **dadurch gekennzeichnet, dass** der Elektrolyseur ein Protonen-Austausch-Membran-Elektrolyseur (PEM), ist.
